(19) Europäisches Patentamt
European Patent Office
Office européen des brevets

(11) **EP 3 156 437 B1**

(12) **EUROPEAN PATENT SPECIFICATION**

(45) Date of publication and mention
of the grant of the patent:
**12.12.2018   Bulletin 2018/50**

(21) Application number: **15806559.9**

(22) Date of filing: **01.05.2015**

(51) Int Cl.:
*C08G 81/00* (2006.01)          *B32B 25/08* (2006.01)
*B60C 1/00* (2006.01)           *B60C 5/14* (2006.01)
*C08L 87/00* (2006.01)          *C09D 151/06* (2006.01)
*C09D 151/08* (2006.01)         *C08L 51/06* (2006.01)
*C08L 51/08* (2006.01)          *B32B 25/14* (2006.01)
*B32B 25/20* (2006.01)

(86) International application number:
**PCT/JP2015/002317**

(87) International publication number:
**WO 2015/190029 (17.12.2015 Gazette 2015/50)**

(54) **GRAFT COPOLYMER, RESIN COMPOSITION, COATING FILM, LAMINATE, AND TIRE**

PFROPFCOPOLYMER, HARZZUSAMMENSETZUNG, BESCHICHTUNGSFILM, LAMINAT UND REIFEN

COPOLYMÈRE GREFFÉ, COMPOSITION DE RÉSINE, FILM DE REVÊTEMENT, STRATIFIÉ ET PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.06.2014   JP 2014121710**

(43) Date of publication of application:
**19.04.2017   Bulletin 2017/16**

(73) Proprietor: **Bridgestone Corporation**
**Tokyo 104-8340 (JP)**

(72) Inventors:
• **NISHII, Masayuki**
**Tokyo 104-8340 (JP)**

• **SUGIYAMA, Kenji**
**Tokyo 102-8160 (JP)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
**EP-A1- 2 075 138          EP-A1- 2 135 903
JP-A- H11 349 601          JP-A- S59 108 915
JP-A- 2002 088 334         JP-A- 2006 199 779
JP-A- 2009 263 417         JP-A- 2011 069 002
US-A- 4 075 186            US-A- 5 993 923
US-A- 6 072 013**

**Description**

TECHNICAL FIELD

The present invention discloses a laminate provided with a coating film made of a resin composition containing a graft copolymer and a rubber layer arranged in contact with the coating film.

BACKGROUND

Barrier materials having a hydrogen bonding portion such as polyamide resin, cellulosic resin, polyvinyl alcohol, ethylene polyvinyl alcohol can exhibit excellent weather resistance and gas barrier property that reflect the strength of intermolecular interaction between main chains.

However, the aforementioned barrier resin, considering its practical application in various industrial products, has problems in flexibility and fatigue resistance. Further, it is often difficult to ensure its adhesive force to other material, and for example, when it is used in applications represented by a tire where numerous repeated deformations are caused on the rubber base material, there were problems in the strength against fatigue of the barrier material and adhesive force to rubber. Therefore, attempts have been made to improve these performances.

As a technique for improving the flexibility of the barrier material, for example, JP2012250576A (PTL1) discloses adopting a multilayer structure formed by alternately laminating a layer composed of a barrier material and a flexible elastomer layer to achieve both gas barrier property and flexibility.

Further, as a technique for improving the adhesiveness of the barrier material, for example, JP2013071968A (PTL2) discloses improving gas barrier property and interlayer adhesiveness by using a resin composition containing an ethylene-vinylalcohol copolymer, a thermoplastic polyester resin, a thermoplastic resin having a carbon-carbon double bond, and a transition metal salt.

PTL3 discloses a graft copolymer having a polyacrylate backbone grafted with polybutadiene side chains.

PTL4, PTL5 and PTL 6 disclose a graft copolymer having silicone-based side chains.

PTL7 discloses a rubber-metal laminate, wherein the rubber surface is coated with a coating agent, which comprises a graft copolymer obtained by reacting a cellulose derivative, with an isocyanate group-containing 1,2-polybutadiene. The cellulose derivative is used preferably in an amount from 10 to 30 wt.% and the polybutadiene in an amount preferably from 30 to 60 wt.% on the basis of the total solid matter component in the film formed from the coating agent.

PTL8 discloses a rubber article having a coating deposited on a surface thereof from an aqueous suspension comprising an emulsion acrylic copolymer comprising of from 0.7 to 20% by weight of at least one copolymerizable silicone oligomer, from 30 to about 85% by weight of at least one alkyl acrylate.

CITATION LIST

Patent Literature

PTL 1: JP2012250576A
PTL 2: JP2013071968A
PTL3 US 4075186 A
PTL4 EP2075138 A1
PTL5 US6072013 A
PTL6 JP2011069002
PTL7 EP2135903 A1
PTL8 US5993923 A

SUMMARY

(Technical Problem)

However, with the technique of PTL1, the interface strength between the layer composed of a barrier material and an elastomer layer is insufficient due to the absence of a chemical bond between the two layers, and therefore improvement was required regarding the problem in that strength and adhesiveness decreases by the repeated bending (i.e. fatigue resistance is poor). Further, since each layer has a film-like form and the molding workability is limited, for example, when considering an application as a coating material for a tire sidewall, further improvement was required so that it can be adhered to the projections and recesses on the vulcanized tire surface.

Further, with the technique of PTL2, there was a problem in fatigue resistance due to the insufficient interface strength between phase separated domains in the composition. Therefore, when considering an application as a tire sidewall coating material, further improvement was also required for flexibility.

It could thus be helpful to provide a graft copolymer having excellent flexibility, adhesiveness and fatigue resistance while having a high gas barrier property, and to provide, by using the graft copolymer, a resin composition, a coating film, a laminate and a tire having excellent gas barrier property, flexibility, adhesiveness and fatigue resistance.

(Solution to Problem)

As a result of keen studies to solve the above problems, we found that, by introducing a synthetic rubber, as a graft chain, to the main chain of a certain resin having excellent gas property, via a terminal portion of the synthetic rubber, excellent flexibility and adhesiveness similar to those obtained when blending a barrier resin and a synthetic rubber are obtained, and due to the bond of the barrier resin and the synthetic rubber formed by graft polymerization, the interface strength between micro domains is higher compared to a blended system, and fatigue resistance can be improved. The disclosure has been completed based on the above findings.

The present invention discloses a laminate provided with a coating film made of a resin composition containing a graft copolymer and a rubber layer arranged in contact with the coating film, wherein in the graft copolymer, a synthetic rubber is introduced, as a graft chain, to a main chain of one or more types of resins. According to the present invention the synthetic rubber is introduced, as a graft chain, to a main chain of one or more types of resins selected from a group consisting of polyacrylic acid, polyamide resin, cellulosic resin, polyvinylalcohol resin, ethylene polyvinylalcohol resin, acrylate resin and urethane resin, via a terminal portion of the synthetic rubber. According to the graft copolymer described herein, excellent gas barrier property, flexibility, adhesiveness and fatigue resistance can be achieved.

Futher, the resin of the graft copolymer is preferably one or more types of resins selected from a group consisting of polyvinylalcohol resin, ethylene polyvinylalcohol resin, and acrylate resin. This enables securing an even better gas barrier property.

In addition, the synthetic rubber of the graft copolymer is one or more types of rubbers selected from a group consisting of polybutadiene rubber, polyisoprene rubber, polyisobutylene rubber, styrene-butadiene rubber, acrylonitrile-butadiene rubber, polychloroprene rubber, and ethylene-propylene rubber, having a reactive functional group on one terminal of a molecular chain, the rubber being introduced to a main chain of the resin via the reactive functional group. This enables securing even better flexibility, adhesiveness and fatigue resistance.

Moreover, in the graft copolymer, a volume ratio of a main chain portion of the barrier resin to a graft chain portion of the synthetic rubber is in a range of 50:50 to 99:1. This enables achieving an excellent gas barrier property, as well as flexibility, adhesiveness and fatigue resistance.

The resin composition described herein contains the graft copolymer described herein. According to the resin composition described herein, excellent gas barrier property, flexibility, adhesiveness, and fatigue resistance can be achieved.

For the coating film described herein, the resin composition described herein is used. According to the coating film described herein, excellent gas barrier property, flexibility, adhesiveness, and fatigue resistance can be achieved.

The laminate described herein is provided with the coating film described herein and a rubber layer arranged in contact with the coating film. According to the laminate described herein, excellent gas barrier property, flexibility, adhesiveness, and fatigue resistance can be achieved.

For the tire described herein, the laminate described herein is used. According to the tire described herein, excellent gas barrier property, flexibility, adhesiveness, and fatigue resistance can be achieved.

(Advantageous Effect)

The present invention discloses a laminate provided with a coating film made of a resin composition containing a graft copolymer and a rubber layer arranged in contact with the coating film, wherein in the graft copolymer, a synthetic rubber is introduced, as a graft chain, to a main chain of one or more types of resins selected from a group consisting of polyacrylic acid, polyamide resin, cellulosic resin, polyvinylalcohol resin, ethylene polyvinylalcohol resin, acrylate resin and urethane resin, via a terminal portion of the synthetic rubber, wherein the synthetic rubber is one or more types of rubbers selected from a group consisting of polybutadiene rubber, polyisoprene rubber, polyisobutylene rubber, styrene-butadiene rubber, acrylonitrile-butadiene rubber, polychloroprene rubber, and ethylene-propylene rubber, having a reactive functional group on one terminal of a molecular chain, and the synthetic rubber is introduced to the main chain of the resin via the reactive functional group, and wherein a volume ratio of a main chain portion of a barrier resin to the graft chain portion of the synthetic rubber is in a range of 50:50 to 99:1. The laminate according to the present invention and a tire comprising such laminate will have excellent gas barrier property, flexibility, adhesiveness and fatigue resistance.

BRIEF DESCRIPTION OF THE DRAWINGS

In the accompanying drawing:

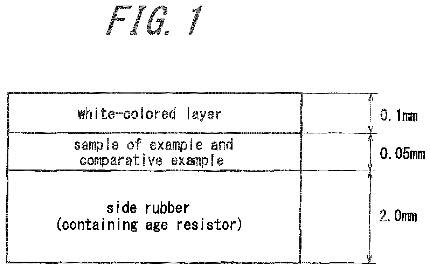

FIG. 1 describes the structure of a laminate used for evaluating the discoloration preventing effect of the example.

DETAILED DESCRIPTION

The disclosure is described in detail below, by way of embodiments.

(Graft Copolymer)

In the graft copolymer described herein, a synthetic rubber is introduced, as a graft chain, to a main chain of one or more types of resins selected from a group consisting of polyacrylic acid, polyamide resin, cellulosic resin, polyvinylalcohol resin, ethylene polyvinylalcohol resin, acrylate resin and urethane resin (hereinafter referred to as "barrier resin" as necessary), via a terminal portion of the synthetic rubber.
By adopting the above structure, it is possible to improve flexibility, adhesiveness and fatigue resistance while maintaining an excellent gas barrier property.
Since the aforementioned main chain of barrier resin and graft chain of synthetic rubber become incompatible with each other in a bulk state, the obtained copolymer forms a microphase-separated structure of a barrier resin and a synthetic rubber. For example, when the volume fraction of the resin being the main chain is large, a sea-island structure in which the resin portion is the sea and the synthetic rubber portion is the island is formed, and when the volume fraction is reversed, an opposite sea-island structure is formed.
Further, when a microphase-separated structure of a barrier resin and a synthetic rubber is formed, the same effect as when blending them is obtained. That is, while the effects of gas barrier property and chemical resistance is obtained by the barrier resin, it is also possible to improve flexibility and adhesiveness by the effect of synthetic rubber. In addition, depending on the type of synthetic rubber, the effects of impact resistance, bending resistance and the like can further be exhibited.
Further, since, in the obtained graft copolymer, the main chain of barrier resin and graft chain of synthetic rubber form a chemical bond, the interface strength between micro domains is higher compared to a blended system. Therefore, it is possible to improve fatigue resistance compared to the conventional blend of barrier resin and synthetic rubber.
In the disclosure, solubility into the solvent can be maintained or imparted by setting the grafting point (reaction point) of the synthetic rubber to the main chain of the barrier resin to be a terminal portion. Therefore, for example, in film formation using the graft copolymer described herein, an effect is obtained in that processing can be performed in the paint state.
From the viewpoint of enabling improvement of flexibility, adhesiveness and fatigue resistance while maintaining an excellent gas barrier property, the volume ratio of the main chain portion of the barrier resin to the graft chain portion of the synthetic rubber is in the range of 50:50 to 99:1, and more preferably in the range of 70:30 to 95:5. This is because, when the volume ratio of the barrier resin is less than 50:50, a desirable gas barrier property may not be obtained due to the small ratio of barrier resin in the graft copolymer, whereas when the volume ratio of the barrier resin exceeds 99 : 1, desirable flexibility, adhesiveness and fatigue resistance may not be obtained due to the small ratio of synthetic rubber in the graft copolymer.

(1) Barrier resin

The graft copolymer described herein has a main chain of one or more types of resins (barrier resin) selected from a group consisting of polyacrylic acid, polyamide resin, cellulosic resin, polyvinylalcohol resin, ethylene polyvinylalcohol resin, acrylate resin and urethane resin.
By including the above main chain of barrier resin, gas barrier property can be imparted to the graft copolymer.
However, from the viewpoint of further improving gas barrier property, it is preferably one or more types of resins selected from a group consisting of polyvinylalcohol resin, ethylene polyvinylalcohol resin, and acrylate resin.
Further, the barrier resin preferably has a functional group that is easily reacted during graft polymerization of carboxyl group, hydroxyl group, amino group or the like.
The polyacrylic acid is a copolymer of acrylic acid, and methacrylic acid or an ester copolymer thereof may also be used in a similar manner.
Examples of the polyamide resin include aliphatic polyamide homopolymers such as nylon 6, nylon 11, nylon 12, nylon 6,6, and nylon 6,10; aliphatic polyamide copolymers such as nylon 6,12, and nylon 6,6; polymetaxylene adipamide (MX nylon), nylon MXD6 and the like. Among the above, it is preferable to use nylon 6 and nylon 6,6. These polyamide resins may be used alone or in combination of two or more.

The cellulosic resin is a thermoplastic resin including a natural polymer fibrin as the base, and for example, cellulose, triacetylcellulose, nitrocellulose, hydroxypropylcellulose or the like are preferably used. These cellulose resins may be used alone or in combination of two or more.

As the urethane resin, a resin having an urethane bond which is a two-component curable urethane resin (polyol and isocyanate) is preferably used. Preferable examples of polyol to be used include polyester polyol, polyether polyol, and polycarbonate polyol. Further, preferable examples of isocyanate to be used include tolylenediisocyanate (TDI), diphenylmethane diisocyanate (MDI), and isophorone diisocyanate (IPDI). As a method for preparing a composition, it is preferable to mix together liquid 1 in which polyol and a ring compound are already mixed and liquid 2 containing isocyanate immediately before use. These urethane resins may be used alone or in combination of two or more.

The polyvinylalcohol resin may be a homopolymer composed of only a viny lalcohol unit or a copolymer composed of vinyl alcohol and a monomer copolymerizable thereto (hereinafter also referred to as "PVA copolymer"). These polyvinylalcohol resins may be used alone or in combination of two or more.

The polyvinylalcohol resin is not particularly limited by the manufacturing method thereof, and for example, those obtained by saponifying vinyl ester polymers such as polyvinyl acetate can be used. Examples of the vinyl ester monomer for forming a vinyl ester unit include vinyl formate, vinyl acetate, vinyl propionate, vinyl valerate, vinyl caprate, vinyl laurate, vinyl stearate, vinyl benzoate, vinyl pivalate, and vinyl versatate. Among the above, vinyl acetate is preferable from the viewpoint that PVA can be obtained with good productivity.

Examples of copolymerizable monomers constituting a PVA copolymer include $\alpha$-olefins such as ethylene, propylene, 1-butene, isobutene, and 1-hexene; acrylic acid and salt thereof; acrylates such as methyl acrylate, ethyl acrylate, n-propyl acrylate, and i-propyl acrylate; methacrylic acid and salt thereof; methacrylates such as methyl methacrylate, ethyl methacrylate, n-propyl methacrylate, and i-propyl methacrylate; acrylamide derivatives such as acrylamide, N-methyl acrylamide, and N-ethyl acrylamide; methacrylamide derivatives such as methacrylamide, N-methyl methacrylamide, and N-ethyl methacrylamide; vinyl ethers such as methyl vinyl ether, ethyl vinyl ether, n-propyl vinyl ether, i-propyl vinyl ether, and n-butyl vinyl ether; vinyl ethers containing hydroxyl group such as ethylene glycol vinyl ether, 1,3-propanediol vinyl ether, and 1,4-butanediol vinyl ether; allyl ethers such as allyl acetate, propylallyl ether, butylallyl ether, and hexylallyl ether; monomers having oxyalkylene group such as polyoxyethylene group, polyoxypropylene group, and polyoxybutylene group; vinylsilanes such as vinyltrimethoxysilane; $\alpha$-olefins containing hydroxy group such as isopropenyl acetate, 3-buten-1-ol, 4-penten-1-ol, 5-hexen-1-ol, 7-octen-1-ol, 9-decen-1-ol, 3-methyl-3-buten-1-ol, or ester compound thereof; N-vinyl amides such as N-vinylformamide, N-vinylacetamide, and N-vinylpyrrolidone; monomers having carboxyl group derived from fumaric acid, maleic acid, itaconic acid, maleic anhydride, phthalic anhydride, trimellitic anhydride, itaconic anhydride or the like; monomers having sulfonic groups derived from ethylene sulfonic acid, allylsulfonic acid, methallyl sulfonic acid, 2-acrylamido-2-methylpropane sulfonic acid and the like; monomers having cationic group derived from vinyloxyethyltrimethyl ammonium chloride, vinyloxybutyltrimethyl ammonium chloride, vinyloxyethyldimethylamine, vinyloxymethyldiethylamine, N-acrylamide methyl trimethyl ammonium chloride, N-acrylamide ethyl trimethyl ammonium chloride, N-acrylamide dimethyl amine, allyltrimethyl ammonium chloride, methallyl trimethyl ammonium chloride, dimethylallylamine, allylethylamine and the like.

The content of these copolymerizable monomer units (hereinafter also referred to as "comonomer units") is preferably 20 mol% or less, more preferably 10 mol% or less of 100 mol% of all of the monomer units constituting the PVA copolymer. Further, in order to exhibit the advantage of being copolymerized, it is preferable that 0.01 mol% or more are comonomer units.

The polyvinylalcohol resin may be completely saponified, or partially saponified. In other words, they may be partially saponified polyvinylalcohol resins. From the viewpoints of gas barrier property, the degree of saponification is preferably 90 mol% or more, more preferably 98 mol% or more, further preferably 99 mol% or more, and particularly preferably 99.5 mol% or more.

The polyvinylalcohol resin also includes a modified polyvinylalcohol resin. The modified polyvinylalcohol resin is a resin where various modified groups are introduced into a vinyl alcohol polymer.

The ethylene polyvinylalcohol resin can be obtained, for example, by obtaining an ethylene vinyl ester copolymer by polymerizing ethylene and vinyl ester, and then saponifying the ethylene vinyl ester copolymer. Commercially available products may be purchased as well.

From the viewpoint of improving gas barrier property, the ethylene content of the ethylene polyvinylalcohol resin is preferably 3 mol% to 70 mol%, more preferably 10 mol% to 60 mol%, further preferably 20 mol% to 55 mol%, and particularly preferably 25 mol% to 50 mol%.

Further, from the viewpoint of interlayer adhesiveness, in addition to gas barrier property, the degree of saponification of the ethylene polyvinylalcohol resin is preferably 80 % or more, more preferably 90 % or more, further preferably 95 % or more, and particularly preferably 99 % or more. On the other hand, the degree of saponification is preferably 99.99 % or less.

In addition, from the viewpoint of interlayer adhesiveness, in addition to gas barrier property, the melt flow rate (MFR) of the ethylene polyvinylalcohol resin is preferably 0.1 g/10 min to 30 g/10 min, and more preferably 0.3 g/10 min to 25 g/10 min at a temperature of 190 °C under a load of 21.16 kg.

Regarding the ethylene polyvinylalcohol resin, it is preferable that the content G (mol%) of 1,2-glicol binding structural units satisfies:

$$G \leq 1.58 - 0.0244 \times E$$

[where G is the content (mol%) of 1,2-glicol binding structural units, E is the ethylene unit content (mol%) in EVOH and E ≤ 64], and the intrinsic viscosity is in the range of 0.05 L/g to 0.2 L/g.

By using such ethylene polyvinylalcohol resin, the humidity dependency of gas barrier property of the obtained graft copolymer becomes small. The content of 1,2-glicol binding structural units can be measured by the nuclear magnetic resonance method at a temperature of 90 °C in accordance with the method disclosed in "S. Aniya et al, Analytical Science Vol. 1, 91 (1985)" using an EVOH sample as a dimethyl sulfoxide solution.

The ethylene polyvinylalcohol resin includes a modified ethylene polyvinylalcohol resin. The modified ethylene polyvinylalcohol resin is a polymer that has, in addition to an ethylene unit and a vinylalcohol unit, other repeating units (hereinafter, also referred to as structural units), for example one or a plurality of types of repeating units derived from these units.

The acrylate resin is a copolymer of acrylate or methacrylate, and an example thereof is a compound that may react with monofunctional or multifunctional ethylenically unsaturated monomer units that may form a crosslinked structure, or ethylenically unsaturated monomer units introduced into polymer chains, to form a crosslinked structure. Examples of ethylenically unsaturated monomer units include a monomer that is preferably non-crosslinkable where the glass transition temperature of the homopolymer is in a range of -90 °C to -5 °C, for example, at least one type of soft component selected from methyl acrylate, n-butyl acrylate, isobutyl acrylate, isopropyl acrylate, n-hexyl (meth)acrylate, 2-ethylhexyl (meth)acrylate and the like, or a monomer that is preferably non-crosslinkable where the glass transition temperature of the homopolymer is in a range of 50 °C to 250 °C, for example, at least one type of hard component selected from methyl methacrylate, ethyl methacrylate, isopropyl methacrylate, isobutyl methacrylate, cyclohexyl methacrylate, (meth)acrylate and the like.

Specifically, acrylate resins are various resins or the like obtained by performing polymerization reaction of ethylenically unsaturated monomers composed of at least one type of crosslinkable component selected from ethylene glycol di(meth)acrylate, triethylene glycol di(meth)acrylate, polyethylene glycol di(meth)acrylate, 1,4-butanediol di(meth)acrylate or the like.

When using the graft copolymer disclosed herein as the coating film, the molecular weight of the barrier resin is preferably 5000 or more from the viewpoint of securing the strength thereof.

(2) Synthetic rubber

In the graft copolymer described herein, a synthetic rubber is introduced, as a graft chain, to the main chain of the barrier resin via the terminal portion of the synthetic rubber.

By introducing the synthetic rubber as a graft chain, it is possible to impart flexibility, adhesiveness and fatigue resistance to the graft copolymer.

Further, by limiting the grafting point of the synthetic rubber to the terminal portion, solubility into the solvent can be maintained or imparted. Therefore, for example, when using the graft copolymer described herein for film formation, processing can be performed in the paint state.

The synthetic rubber is one or more types of rubber selected from a group consisting of polybutadiene rubber, polyisoprene rubber, polyisobutylene rubber, styrene-butadiene rubber, acrylonitrile-butadiene rubber, polychloroprene rubber, and ethylene-propylene rubber.

Further, the synthetic rubber has a reactive functional group on one terminal of the molecular chain, and that it is introduced to the main chain of the resin via the reactive functional group. This facilitates reaction during graft polymerization. Examples of the reactive functional group include carboxyl group, hydroxyl group, amino group, and silyl group. The introducing part of such functional group is not particularly limited. However, from the viewpoint of easier handling of reaction efficiency and reactant, the functional group is introduced at a terminal on one side.

From the viewpoint of further improving adhesiveness, the synthetic rubber preferably has unsaturated carbon-carbon bonds in the main chain. Examples of rubber having unsaturated carbon-carbon bonds in the main chain include diene rubbers such as polyisoprene rubber, styrene-butadiene rubber and polybutadiene rubber, and butyl rubber.

(3) Grafting Reaction

In the graft copolymer described herein, the synthetic rubber is introduced, as a graft chain, to the main chain of the barrier resin.

An example of a method of carrying out grafting reaction is, in a case where the synthetic rubber to be grafted has a carboxyl group, a method of performing esterification reaction with the polyvinyl alcohol hydroxyl group of the main chain using an esterifying agent.

The contents of the barrier resin and the synthetic rubber are such the volume ratio of the main chain portion of the barrier resin to the graft chain portion of the synthetic rubber is in a range of 50:50 to 99:1.

(Resin Composition)

The resin composition described herein contains the aforementioned graft copolymer described herein.

By adopting the above structure, the resin composition described herein can achieve excellent flexibility, adhesiveness, and fatigue resistance while having a high gas barrier property.

Components other than the graft copolymer of the resin composition described herein are not particularly limited, and optional components may be contained as required.

For example, for the purpose of achieving desirable decorativeness and visibility of the rubber member, it is possible to contain various colorants in addition to the graft copolymer. The coloring agent is blended in order to make the color layers different from the color of the rubber layer. For example, in a case where the rubber layer is black, a coloring agent other than black is used.

An organic or inorganic pigment or die can be used as the coloring agent. An example of the inorganic pigment is titanium oxide. Examples of white coloring agent include titanium oxide, antimony white, zinc sulfide. Examples of red coloring agent include red iron oxide, cadmium red, red lead, mercury sulfide, cadmium, permanent red 4R, lithol red, pyrazolone red, watching red, calcium salt, lake red D, brilliant carmine 6B, eosine lake, rhodamine lake B, alizaline lake, brilliant carmine 3B, C.I. pigment red 2. Examples of blue coloring agent include C.I. pigment blue 15:3, C.I. pigment blue 15, prussian blue, cobalt blue, alkali blue lake, Victoria blue lake, phthalocyanine blue, metal-free phthalocyanine blue, partially chlorinated phthalocyanine blue, first sky blue, indanthrene blue BC. Examples of yellow coloring agent include chrome yellow, zinc yellow, cadmium yellow, yellow oxide, mineral first yellow, nickel titanium yellow, navel yellow, naphthol yellow S, Hansa yellow G, Hansa yellow 10G, benzidine yellow G, benzidine yellow GR, quinoline yellow lake, permanent yellow NCG, tartrazine lake, C.I. pigment yellow 12.

(Coating Film)

For the coating film described herein, the aforementioned resin composition described herein is used.

By adopting the above structure, the coating film described herein achieves excellent flexibility, adhesiveness, and fatigue resistance while having a high gas barrier property.

The method of forming the coating film described herein using the resin composition is not particularly limited.

For example, the coating film may be formed by coating the rubber surface of a vulcanized tire by screen printing, inkjet printing, relief printing, tampo printing or the like. The coating layer may be formed on the outer surface of the tire by using in-mold coating where a film obtained by applying the resin composition beforehand and curing in the mold when vulcanizing the tire.

(Laminate)

The laminate described herein is provided with the aforementioned coating film described herein and a rubber layer arranged in contact with the coating film.

By adopting the above structure for the laminate described herein, the formed coating film achieves excellent flexibility and fatigue resistance while having a high gas barrier property, and further, the adhesiveness with the rubber layer is improved.

For the rubber layer constituting the laminate described herein, a rubber composition containing a rubber component that includes unsaturated carbon-carbon bonds in the main chain is preferably applied in order to secure adhesion with the coating film.

Examples of the rubber component having unsaturated carbon-carbon bonds in the main chain include natural rubber and synthetic rubber. Further, examples of the synthetic rubber include diene rubbers such as synthetic polyisoprene rubber, styrene-butadiene rubber and polybutadiene rubber, and butyl rubber. These rubber components may be used alone or in combination of two or more.

Further, in a rubber composition constituting the rubber layer, 15 mass% or more of the rubber component is preferably a non-diene based rubber. This is because, when 15 mass% or more of the rubber component is non-diene based rubber, the weather resistance of the rubber layer is remarkably improved.

In addition to the rubber components described above, additives generally used in the rubber industry such age resistor, fillers such as carbon black, vulcanizing agents such as sulfur, vulcanization accelerator, process oil, antiscorching agent, zinc white, and stearic acid may be appropriately selected and blended with the rubber composition constituting the rubber layer in a range not impairing the object of the disclosure. Commercially available products may be suitably used as these additives.

Further, the rubber composition can be manufactured by subjecting the rubber components to kneading and mixing of various additives selected as appropriate, warming, extrusion and the like.

(Tire)

For the tire described herein, the laminate described herein is used.

As the application site of the laminate, the laminate can be applied to, for example, a surface portion of a sidewall portion of a pneumatic tire provided with a pair of bead portions, a pair of sidewall portions, a tread portion continuous with the respective sidewalls, a carcass toroidally extending between bead cores embedded in the bead portions, and a belt provided on the outer side in the tire radial direction of the crown portion of the carcass.

Further, in the tire described herein, the laminate described herein may be applied to the sidewall portion, and further, the laminate may also be applied, for example, as an inner liner of a tire.

EXAMPLES

Though the disclosure will be described in further detail below with reference to examples, the disclosure is not limited to these examples.

(Synthetic Rubber)

The synthetic rubber was synthesized or prepared as described below.

(A) Synthesis of Polybutadiene Rubber

To a nitrogen gas-substituted autoclave vessel, sec-BuLi (sec-butyllithium), methylcyclohexane and butadiene were added, and the mixture thus obtained was stirred under adiabatic conditions for 1 hour. After stirring, THF (tetrahydrofuran) was added dropwise. Then, the inside of the vessel was substituted with argon, and a reaction solution was poured into a recovery flask filled with carbon dioxide using dry ice to stop the reaction.

The solvent of the obtained solution was removed by pumping, the polymer was dissolved again with THF, and then hydrochloric acid was added to neutralize the terminal carboxyl group. By vacuum distilling THF, washing the polymer several times with methanol, and performing freeze drying from the benzene solution, a polymer solid of polybutadiene rubber as a sample was obtained.

(B) Synthesis of Polyisoprene Rubber

Under a high vacuum environment, sec-BuLi (sec-butyllithium) was added to a round-bottom flask and diluted with methylcyclohexane. While maintaining a temperature of 0 °C using an ice bath, isoprene was added, and the mixture thus obtained was stirred for 15 minutes. After stirring at room temperature for 15 minutes, the mixture was stirred for another hour while maintaining the temperature in the reaction system at 40 °C using an oil bath. After stirring, the temperature was returned to room temperature, cooled to -50 °C, and then THF (tetrahydrofuran) was added dropwise. Then, the inside of the flask was substituted with argon, and a reaction solution was poured into a recovery flask filled with carbon dioxide using dry ice to stop the reaction.

The solvent of the obtained solution was removed by pumping, the polymer was dissolved again with THF, and then hydrochloric acid was added to neutralize the terminal carboxyl group. By vacuum distilling THF, washing the polymer several times with methanol, and performing freeze drying from the benzene solution, a polymer solid of polyisoprene rubber as a sample was obtained.

(C) Synthesis of Styrene-butadiene Rubber (SBR)

To a nitrogen gas-substituted autoclave vessel, sec-BuLi (sec-butyllithium), methylcyclohexane, styrene and butadiene were added, and the mixture thus obtained was stirred under adiabatic conditions for 1 hour (styrene/butadiene = 1/3 weight ratio). After stirring, THF (tetrahydrofuran) was added dropwise. Then, the inside of the vessel was substituted with argon, and a reaction solution was poured into a recovery flask filled with carbon dioxide using dry ice to stop the reaction.

The solvent of the obtained solution was removed by pumping, the polymer was dissolved again with THF, and then hydrochloric acid was added to neutralize the terminal carboxyl group. By vacuum distilling THF, washing the polymer several times with methanol, and performing freeze drying from the benzene solution, styrene-butadiene rubber as a sample was obtained.

(D) Polydimethyl Silicone (PDMS)

For polydimethyl silicone serving as a sample, "X-22-173DX" manufactured by Shin-Etsu silicone was used.

(Barrier Resin)

The following barrier resins were prepared.

> (A) Ethylene vinyl alcohol resin: "Eval F101B" manufactured by Kuraray Co., Ltd.
> (B) Polyvinylalcohol Resin: "Poval PVA110" manufactured by Kuraray Co., Ltd.
> (C) Cellulosic Resin: Hydroxypropylcellulose, "NISSO HPC L" manufactured by Nippon Soda Co., Ltd.
> (D) Polyacrylic Acid: "Polyacrylic Acid 5,000" manufactured by Wako Pure Chemical Industries, Ltd.

<Inventive Examples 1-7, 8-12 and Reference Examples 7, 13 and 14>

The barrier resins shown in Table 1 were dissolved in a 3:1 mixture solvent (weight ratio) of DMSO (dimethylsulfoxide) and THF, and then a synthetic rubber shown in Table 1 was added and dissolved in an amount of 20 wt.% of the barrier resin. Then, 1-ethyl-3 -(3-dimethylaminopropyl)carbodiimide hydrochloride and 4,4'-dimethylaminopyridine were added (in an amount of 20 wt.% and 0.1 wt.% respectively of the synthetic rubber), and the mixture thus obtained was stirred at room temperature for 1 day.

Then, by reprecipitating the reaction solution with methanol and filtering, the graft copolymers of each example were obtained.

The conditions of the barrier resins and synthetic rubbers used are shown in Table 1.

<Comparative Examples 1 to 5>

As shown in Table 1, for the comparative examples, the barrier resin and synthetic rubber were not graft-polymerized, and either the barrier resin or synthetic rubber was used alone.

[Table 1]

| Sample No. | Barrier Resin | | Synthetic Rubber | | | | | |
|---|---|---|---|---|---|---|---|---|
| | Name | Volume Fraction (%) | Name | Modified Functional Group | Number of Modifications | Modified Part | Volume Fraction (%) | Molecular Weight (×10$^4$) |
| Comparative Example 1 | EVOH | 100 | - | - | - | - | - | - |
| Comparative Example 2 | - | - | Polybutadiene | - | - | - | 100 | 26 |
| Comparative Example 3 | PVA | 100 | - | - | - | - | - | - |
| Comparative Example 4 | Cellulosic Resin | 100 | - | - | - | - | - | - |
| Comparative Example 5 | Polyacrylic Acid | 100 | - | - | - | - | - | - |
| Example 1 | EVOH | 90 | Polybutadiene | Carboxyl Group | 1 | Terminal | 10 | 20 |
| Example 2 | EVOH | 90 | Polybutadiene | Carboxyl Group | 1 | Terminal | 10 | 0.5 |
| Example 3 | EVOH | 90 | Polybutadiene | Carboxyl Group | 1 | Terminal | 10 | 50 |
| Example 4 | EVOH | 50 | Polybutadiene | Carboxyl Group | 1 | Terminal | 50 | 20 |
| Example 5 | EVOH | 30 | Polybutadiene | Carboxyl Group | 1 | Terminal | 70 | 20 |
| Example 6 | EVOH | 90 | Polyisoprene | Carboxyl Group | 1 | Terminal | 10 | 20 |
| * Example 7 | EVOH | 95 | Polyisoprene | Carboxyl Group | 10 | Side Chain | 5 | 30 |
| Example 8 | EVOH | 90 | SBR | Carboxyl Group | 1 | Terminal | 10 | 20 |
| Example 9 | PVA | 90 | Polybutadiene | Carboxyl Group | 1 | Terminal | 10 | 20 |
| Example 10 | Cellulosic Resin | 90 | Polybutadiene | Carboxyl Group | 1 | Terminal | 10 | 20 |
| Example 11 | Polyacrylic Acid | 90 | Polybutadiene | Amino Group | 1 | Terminal | 10 | 20 |
| Example 12 | Polyacrylic Acid | 90 | Polybutadiene | Hydroxyl Group | 1 | Terminal | 10 | 20 |

(continued)

| Sample No. | Barrier Resin | | Synthetic Rubber | | | | | |
|---|---|---|---|---|---|---|---|---|
| | Name | Volume Fraction (%) | Name | Modified Functional Group | Number of Modifications | Modified Part | Volume Fraction (%) | Molecular Weight ($\times 10^4$) |
| * Example 13 | Polyacrylic Acid | 90 | Polybutadiene | Hydroxyl Group | 2 | Both Terminals | 10 | 0.28 |
| * Example 14 | EVOH | 90 | PDMS | Epoxy Group | 1 | Terminal | 10 | 4.5 |
| *Reference Examples | | | | | | | | |

<Evaluation>

(1) Gas Barrier Property (Oxygen Permeability)

The samples of each example and comparative example were processed into a circular shape with a diameter of 50 mm, thickness of 20 $\mu$m, and under the conditions of humidity of 0 % and temperature of 25 °C, oxygen permeability was measured using an OX-TRAN2/20 type manufactured by Modern Control, Inc. The measurement results are shown in Table 2. The smaller values of oxygen permeability show better results.

(2) Flexibility (Breaking Elongation)

For the samples of each example and comparative example, test pieces having a thickness of 0.5 mm were prepared, and breaking elongation (Eb) was measured in accordance with JIS 7161. Specifically, the breaking elongation (%) when pulling the test pieces at a rate of 50 mm/min was measured. The measurement results are shown in Table 2. The larger values of breaking elongation show better results.

(3) Adhesiveness (Peel Adhesive Force)

The samples of each example and comparative example were laminated on the surface of the rubber member (NR/BR vulcanized rubber) in a film-like form with a film thickness of 100 $\mu$m to prepare test pieces of the laminate.
Then, for each test specimen of the laminate, a 90° peel test was performed at a tensile rate of 5 cm/min in accordance with JIS K 6854(1999) to measure the peel adhesive force of the film. The measurement results are shown in Table 2. The larger values of peel adhesive force of the film show better results.

(4) Discoloration Preventing Effect - Assuming Use as Tire Sidewall (Change in Chromaticity)

As shown in Fig. 1, the sidewall rubber containing an age resistor was processed so that it has a thickness of 2.0 mm, and on the processed rubber, the samples of each example and comparative example were laminated in a film-like form with a film thickness of 0.05 mm, and on the film, a white-colored layer (resin ink containing titanium oxide) with a film thickness of 0.1 mm was laminated to obtain samples of the laminate.
The prepared samples of laminate were left to stand under an atmosphere of a temperature of 60 °C, and every other day, the temperature was returned to room temperature, the samples were irradiated with an ultraviolet light of 3 J/cm$^2$, and then the chromaticity of the white-colored layer was measured. The chromaticity after leaving the samples to stand for 20 days was measured, and the change in chromaticity from when the samples were first left to stand was calculated. The obtained change in chromaticity ($\Delta$E) is shown in Table 2. The smaller values of change in chromaticity show better results.

(5) Fatigue Resistance (Number of Bending Operations)

For the samples of each example and comparative example, 50 films cut into a size of 21 cm $\times$ 30 cm were prepared. Each cut film was subjected to humidity control at 0 °C for 7 days, and in accordance with ASTM F392-74, using a Gelbo flex tester manufactured by Rigaku Industrial Corporation, bending operations were carried out 50 times, 75 times, 100 times, 125 times, 150 times, 175 times, 200 times, 225 times, 250 times, 300 times, 400 times, 500 times, 600 times, 700 times, 800 times, 1000 times and 1500 times, and then the number of pin holes was measured. For each number of bending operations, measurement was carried out for 5 times, and the mean value thereof was used as the number of pin holes. Showing the number of bending operations (P) on the horizontal axis and the number of pin holes (N) on the vertical axis, the above measurement results were plotted, and the number of bending operations (Np1) of when there is one pin hole was obtained by extrapolation and indicated by two significant figures. However, for a film where a pin hole was not observed after 1500 bending operations, from that point forward, the number of bending operations was increased by 500 times, and the number of bending operations where a pin hole was observed was indicated as Np1.
For evaluation, the results are shown using an index number by setting the number of bending operations for comparative example 1 as 100. The larger value means more bending operations were performed, and thus the fatigue resistance is higher.

[Table 2]

| Sample No. | Evaluation | | | | |
|---|---|---|---|---|---|
| | Oxygen Permeability (cc/m$^2$ · day · atm) | Breaking Elongation (Eb) (%) | Peel Adhesive Force (N/m) | Change in Chromaticity (ΔE) | Number of Bending Operations |
| Comparative Example 1 | 30 | 20 | 50 | 3 | 100 |
| Comparative Example 2 | 20000 | 1200 | 300 | 20 | 10000 |
| Comparative Example 3 | 10 | 10 | 50 | 3 | 50 |
| Comparative Example 4 | 40 | 10 | 50 | 3 | 200 |
| Comparative Example 5 | 100 | 20 | 50 | 3 | 200 |
| Example 1 | 32 | 50 | 200 | 4 | 500 |
| Example 2 | 31 | 25 | 70 | 3 | 180 |
| Example 3 | 33 | 50 | 300 | 4 | 600 |
| Example 4 | 200 | 200 | 300 | 5 | 800 |
| Example 5 | 2000 | 300 | 250 | 6 | 1000 |
| Example 6 | 32 | 50 | 200 | 3 | 500 |
| * Example 7 | 32 | 15 | 200 | 3 | 500 |
| Example 8 | 33 | 50 | 200 | 3 | 500 |
| Example 9 | 22 | 50 | 200 | 3 | 400 |
| Example 10 | 42 | 50 | 200 | 3 | 600 |
| Example 11 | 110 | 50 | 200 | 3 | 500 |
| Example 12 | 110 | 50 | 200 | 3 | 500 |
| * Example 13 | 105 | 15 | 200 | 3 | 300 |
| * Example 14 | 32 | 50 | 150 | 3 | 700 |
| *Reference Examples | | | | | |

From Table 2, the following was found.

(1) Regarding gas barrier property, the sample consisting of synthetic rubber (comparative example 2) has very poor gas barrier property, whereas the samples consisting of barrier resin (comparative examples 1 and 3 to 5) all have excellent gas barrier property. Further, it was found that the graft copolymers of each example generally have high barrier property, and has the characteristics of the main chains of a barrier resin. However, as shown in examples 3 to 5, a decrease in barrier property is confirmed as the amount of introduced graft chains of the synthetic rubber increases, and it was found that, when the volume fraction of the graft chains exceeds that of the main chains, barrier property tends to decrease (example 5).

(2) Regarding flexibility, it can be seen that samples consisting of barrier resin (comparative examples 1 and 3 to 5) have a significantly lower flexibility compared to the samples of the graft copolymers of each example. It was found that, by grafting a synthetic rubber on a barrier resin having low flexibility alone, Eb is significantly improved. However, as shown in reference examples 7 and 13, it was found that, when there is a plurality of reaction points in the synthetic rubber, Eb tends rather to decrease. This is thought to be because crosslinking occurs between the main chains. Further, it was found that, as the graft introduction amount of synthetic rubber is increased, Eb increases as well (examples 3 to 5).

(3) Regarding adhesiveness, it was found that, the samples of graft copolymers of each example have significantly improved adhesiveness compared to the samples consisting of barrier resin (comparative examples 1 and 3 to 5), and that by grafting synthetic rubber, excellent adhesiveness can be obtained.

(4) Regarding the discoloration preventing effect, in the samples of the graft copolymers of each example, discoloration was greatly suppressed compared to the sample consisting of synthetic rubber (comparative example 2), and that the results are comparable to that of the samples consisting of barrier resin (comparative examples 1 and 3 to 5). Therefore, it was found that the graft copolymer described herein exhibits a high discoloration preventing effect as well.

(5) Regarding fatigue resistance, it was found that, the samples of resin compositions of inventive examples 1 to 6, 8-12 and reference examples 7, 13 and 14 have stronger fatigability compared to comparative examples 1 and 3 to 5, and that imparting flexibility also leads to an improvement in fatigue resistance.

INDUSTRIAL APPLICABILITY

According to the disclosure, a graft copolymer having excellent flexibility, adhesiveness and fatigue resistance while having a high gas barrier property can be provided, and by using the graft copolymer, a resin composition, a coating film, a laminate and a tire having excellent gas barrier property, flexibility, adhesiveness and fatigue resistance can be provided.

## Claims

1. A laminate provided with a coating film made of a resin composition containing a graft copolymer and a rubber layer arranged in contact with the coating film, wherein in the graft copolymer, a synthetic rubber is introduced, as a graft chain, to a main chain of one or more types of resins selected from a group consisting of polyacrylic acid, polyamide resin, cellulosic resin, polyvinylalcohol resin, ethylene polyvinylalcohol resin, acrylate resin and urethane resin, via a terminal portion of the synthetic rubber, wherein the synthetic rubber is one or more types of rubbers selected from a group consisting of polybutadiene rubber, polyisoprene rubber, polyisobutylene rubber, styrene-butadiene rubber, acrylonitrile-butadiene rubber, polychloroprene rubber, and ethylene-propylene rubber, having a reactive functional group on one terminal of a molecular chain, and the synthetic rubber is introduced to the main chain of the resin via the reactive functional group, and wherein a volume ratio of a main chain portion of a resin to the graft chain portion of the synthetic rubber is in a range of 50:50 to 99:1.

2. The laminate according to claim 1, wherein the resin is one or more types of resins selected from a group consisting of polyvinylalcohol resin, ethylene polyvinylalcohol resin, and acrylate resin.

3. A tire wherein the laminate according to claim 1 or 2 is used.

## Patentansprüche

1. Laminat, bereitgestellt mit einem Beschichtungsfilm bzw. Überzugsfilm, der aus einer ein Pfropf-Copolymer enthaltenden Harzzusammensetzung hergestellt ist, und einer Kautschukschicht, die in Kontakt mit dem Beschichtungsfilm angeordnet ist, wobei in dem Pfropf-Copolymer ein synthetischer Kautschuk als eine Pfropf-Kette auf eine Hauptkette von einem oder mehreren Typen von Harzen ausgewählt aus einer Gruppe bestehend aus Polyacrylsäure, Polyamidharz, Celluloseharz, Polyvinylalkoholharz, Ethylenpolyvinylalkoholharz, Acrylatharz und Urethanharz, über einen terminalen Teil des synthetischen Kautschuks eingeführt ist, wobei es sich bei dem synthetischen Kautschuk um einen oder mehrere Typen von Kautschuken ausgewählt aus einer Gruppe bestehend aus Polybutadien-Kautschuk, Polyisopren-Kautschuk, Polyisobutylen-Kautschuk, Styrol-Butadien-Kautschuk, Acrylnitril-Butadien-Kautschuk, Polychloropren-Kautschuk und Ethylen-Propylen-Kautschuk handelt, wobei der synthetische Kautschuk eine reaktive funktionelle Gruppe an einem Terminus einer molekularen Kette aufweist, und der synthetische Kautschuk auf die Hauptkette des Harzes über die reaktive funktionelle Gruppe eingeführt wird, und wobei ein Volumenverhältnis eines Hauptkettenteils eines Harzes zu dem Pfropf-Kettenteil des synthetischen Kautschuks in einem Bereich von 50:50 bis 99:1 liegt.

2. Laminat gemäß Anspruch 1, wobei es sich bei dem Harz um einen oder mehrere Typen von Harzen ausgewählt aus einer Gruppe bestehend aus Polyvinylalkoholharz, Ethylenpolyvinylalkoholharz, und Acrylatharz handelt.

3. Reifen, wobei das Laminat gemäß Anspruch 1 oder 2 verwendet wird.

**Revendications**

1. Stratifié pourvu d'un film de revêtement fabriqué en une composition de résine contenant un copolymère greffé et une couche de caoutchouc disposée en contact avec le film de revêtement, dans lequel, dans le copolymère greffé, un caoutchouc synthétique est introduit par une portion terminale du caoutchouc synthétique, en tant que chaine de greffage sur une chaine principale d'un ou plusieurs types de résines choisies dans le groupe consistant en le poly(acide acrylique), une résine de polyamide, une résine cellulosique, une résine de poly(alcool vinylique), une résine d'éthylène/poly(alcool vinylique), une résine d'acrylate et une résine d'uréthanne, le caoutchouc synthétique étant un ou plusieurs types de caoutchoucs choisis dans le groupe consistant en le caoutchouc polybutadiène, le caoutchouc polyisoprène, le caoutchouc polyisobutylène, le caoutchouc styrène-butadiène, le caoutchouc acrylonitrile-butadiène, le caoutchouc polychloroprène et le caoutchouc éthylène-propylène, ayant un groupe fonctionnel réactif sur un site terminal d'une chaine moléculaire, le caoutchouc synthétique étant introduit dans la chaine principale de la résine par l'intermédiaire du groupe fonctionnel réactif, le rapport en volume de la portion chaine principale d'une résine à la portion chaine greffée du caoutchouc synthétique étant compris dans une plage allant de 50:50 à 99:1.

2. Stratifié selon la revendication 1, dans lequel la résine est un ou plusieurs types de résines choisies dans un groupe consistant en une résine de poly(alcool vinylique), une résine d'éthylène-poly (alcool vinylique) et une résine d'acrylate.

3. Pneumatique dans lequel est utilisé le stratifié selon la revendication 1 ou 2.

# FIG. 1

| | | |
|---|---|---|
| white-colored layer | | 0.1mm |
| sample of example and comparative example | | 0.05mm |
| side rubber (containing age resistor) | | 2.0mm |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012250576 A
- JP 2013071968 A
- US 4075186 A
- EP 2075138 A1
- US 6072013 A
- JP 2011069002 B
- EP 2135903 A1
- US 5993923 A

**Non-patent literature cited in the description**

- **S. ANIYA et al.** *Analytical Science,* 1985, vol. 1, 91